# EUROPEAN PATENT APPLICATION

(11) **EP 3 674 003 A1**
(43) Date of publication of application: **01.07.2020**
(21) Application number: 19172353.5
(22) Date of filing: 02.05.2019
(51) Int. Cl.: B03C 5/00, B03C 5/02, G01N 15/06, B01L 3/00

(54) **IDENTIFYING AND COUNTING PARTICLES USING DIELECTROPHORESIS**

(30) Priority: 28.12.2018 EP 18248257
(71) Applicant: IHP GmbH - Innovations for High Performance Microelectronics / Leibniz-Institut für innovative Mikroelektronik, 15236 Frankfurt (Oder) (DE)
(72) Inventor: Birkholz, Mario, 10997 Berlin (DE); Klatt, Jörg, 15295 Brieskow-Finkenheerd (DE); Abt, Vinzenz, 12103 Berlin (DE)
(74) Representative: Eisenführ Speiser

(57) **Abstract**

A driver circuit 100 for operation of dielectrophoresis (DEP) electrodes (210, 410) of an external DEP system (200) comprises a DEP signal generator unit (110), which is configured to generate and apply an alternating output voltage to at least one pair of DEP electrodes (210, 410), suitable for inducing a dipole moment in particles (414) of a selected particle type comprised in a flowing carrier liquid in a vicinity of the DEP electrodes (210, 410), for manipulating trajectories of the particles (414) within the carrier liquid. A measurement unit (120), which is connected to the DEP electrodes (210, 410) determines and provides an electrical measurement signal indicative of an electrical current drawn by the DEP electrodes (210, 410) as a function of time.

## Description

The present invention relates to a driver circuit for operation of dielectrophoresis electrodes, a dielectrophoresis system, and a method for counting particles.

A dielectrophoresis (DEP) system uses an inhomogeneous electrical field to manipulate particle trajectories. The inhomogeneous electrical field induces dipole moments in particles of a selected particle type. While a dipole in a homogeneous electrical field experiences no net force, it does experience a net force in an inhomogeneous electrical field. The particles of the selected particle type experience a dielectrophoretic force and move depending on the inhomogeneous electrical field and the induced dipole moment. The dielectrophoretic force effect is known to be proportional to volume of the individual particles. Thus, the particles can also be trapped and divided depending on their size. For counting the trapped or manipulated particles and determine the particle size, typically, the DEP system additionally requires an optical microscope. Counting of particles in such a DEP system thus requires additional equipment and personnel.

It would be desirable to reduce the expenditure for particle counting a DEP system.

The present invention provides a driver circuit for operation of DEP electrodes, a DEP system and a method for counting particles for improving particle counting.

According to one aspect of the invention a driver circuit for operation of DEP electrodes of an external dielectrophoresis system is proposed. The driver circuit for operation of the DEP electrodes comprises:
- a DEP signal generator unit, which is configured to generate and apply an alternating output voltage to at least one pair of DEP electrodes, the output voltage having at least one frequency component suitable for inducing a dipole moment in particles of a selected particle type comprised in a flowing carrier liquid in a vicinity of the DEP electrodes, for manipulating trajectories of the particles within the carrier liquid,; and
- a measurement unit, which is connected to the DEP electrodes and configured to determine and provide an electrical measurement signal indicative of an electrical current drawn by the DEP electrodes as a function of time.

The driver circuit of the present invention is based on the recognition that under exposure to an inhomogeneous electrical field electrical charges will be redistributed at an interface between a particle and a carrier liquid, depending on a respective polarizability of the particle and of the carrier liquid. Factors influencing the polarizability of the particles and of the carrier liquid are the electrical conductivity and the dielectric permittivity of the carrier liquid and of the particles.

Thus, under application of an inhomogeneous electrical field, unless the polarizability of the particles and of the carrier liquid is identical, a dipole moment is induced in the particles. The amount and direction of the induced dipole moment, among other factors, depends on a frequency of the applied electrical field.

Assuming a difference in polarizability between the particles and the carrier liquid, the polarizability of a given particle under exposure to an electrical field of a given frequency is inter alia dependent on a size of the particle. Therefore, a response of a micrometre- or larger-sized particle to the electrical field differs from that of a nano-sized particle.

Thus, the electrical response of different types of particles to an inhomogeneous electrical field of given field parameters (amplitude, frequency) typically differs. Types of particles can be differentiated according to their respective combination of size, electrical conductivity and dielectric permittivity. Thus, in the context of the present invention, a selected particle type comprises all those particles, which due to their combination of size, electrical conductivity and dielectric permittivity experience an interaction with the inhomogeneous alternating electrical field generated by the DEP signal generator unit in a vicinity of the DEP electrodes.

The interaction of a given type of particles with an inhomogeneous electrical field having a given frequency may thus lead to a positive, a negative or no force applied to the particle. The force, which is thus applied to a particle under an inhomogeneous electrical field of a given frequency, is herein referred to as the DEP force. The DEP force causes a change of motion of the responding particles in the flowing carrier liquid. Driven by an output voltage having characteristics selected for a specific type of particles to be identified, the at least one pair of DEP electrodes generates an inhomogeneous electric field, which induces a dipole moment in the particles of the selected particle type.

As a result of the application of the inhomogeneous electric field, a trajectory of the particles of the selected particle type is affected. Thus, different particle types, which have different sizes, electrical conductivities or dielectric permittivities, can be spatially separated from each other, making a certain particle type selectable by choice of the frequency component.

Depending on the conditions of a given application, in particular on the particles present, the inhomogeneous electric field can be set to achieve a selectivity that singles out only the selected particle type. In other applications, the applied inhomogeneous electric field induces a dipole moment also in other particles of other particle types, in addition to the particles of the selected particle type. In such other application cases, parameters defining the inhomogeneous electric field should be selected to achieve a best possible selectivity such that the the dipole moment induced in the other particles remains small compared to the dipole moment induced in the particles of the selected particle type.

The driver circuit of the present invention makes use of the above recognitions. In operation of the driver circuit of the present invention, dielectrophoretic interaction between an electrical field, which is suitably generated by the DEP electrodes under application of an alternating output voltage by the DEP signal generator unit, and the individual particles in the carrier liquid, which pass through a measurement volume formed by a vicinity of the DEP electrodes along their spatial extension, results in a certain amount of energy being transferred from the electrical field to the individual particles. The interaction between an electrical field and individual particles thus increases an electrical current drawn by the DEP electrodes by a finite amount per particle. This finite amount of electrical current per particle is detected by the measurement unit of the driver circuit of the present invention as a measurable quantity. A change in an electrical measurement signal representing electrical current amount over time is thus used for detection of the passing of individual particles through the measurement volume. In simplified terms, each particle entering the measurement volume causes a stepwise increase of current, and each particle leaving the measurement volume causes a stepwise decrease of current.

The electrical measurement signal produced by the measurement unit is thus suitable as a basis for counting the detected particles in embodiments to be described further below.

The driver circuit of the present invention advantageously allows using a miniaturized design of a DEP system.

Non-limiting examples of the particles to be manipulated and counted include graphite particles, bacteria and DNA molecules.

In the following, embodiments of the driver circuit will be described.

In a preferred embodiment the driver circuit further comprises a control interface. The control interface is configured to receive a control signal indicative of at least one frequency amount of the at least one frequency component of the output voltage, wherein the DEP signal generator unit receives the control signal and is configured to generate the output voltage with the at least one frequency component indicated by the control signal. By controlling the frequency amount of the frequency component, it is controllable, which selected particle type is affected by the inhomogeneous electrical field.

In some embodiments, the alternating output voltage is substantially constant over a passing time span required by an individual particle of the selected particle type for passing an extension of the DEP electrodes along a direction of flow of the carrier liquid. However, this is not a requirement. In other embodiments, a frequency spectrum of frequency components of the output voltage is used which accounts for an output voltage alternating at a rate of 1kHz, and in yet further ambodiments at a rate of even 1 MHz during the passing time span. The passing time span depends on various parameters, in particular on the extension of the DEP electrodes along the direction of flow of the carrier liquid and on the flow velocity of the carrier liquid.

In microfluidic implementations of a DEP systems, the amplitude of the frequency components is of less importance, due to the small length scales on which the trajectory has to be modified for selecting a given type of particles. Still, in some variants of this embodiment, in particular for effecting larger deviations of the particle trajectories, the control signal is also indicative of at least one amplitude associated with a given frequency component. In such a variant each frequency component has a respective amplitude. The amplitude can be used to vary the strength of the respective frequency component.

In another embodiment the driver circuit further comprises an evaluation unit, which is configured to receive the electrical measurement signal as a function of time and to determine and provide a number of particles of the given selected particle type passing the extension of the DEP electrodes by analysing a dependence of the electrical measurement signal on time, using a predetermined amplitude span value per particle of a given selected particle type in the measurement signal and a predetermined passing time span value.

The predetermined amplitude span value and the predetermined passing time span value of each particle depend on the selected particle type. Thus, the electrical measurement signal detected by the measurement unit as a function of time is indicative of a current-over-time function that includes characteristic steps of the electrical-current amplitude, both up and down. Each particle passing the measurement volume generated by DEP electrodes causes a rising edge (entering) and a falling edge (leaving) in a current-over-time measurement.

Integer multiples of the amplitude span in a step occurring in the current-over-time measurement are indicative of a corresponding plurality of particles of the same type entering or leaving the measurement volume at the same point in time. Based on a suitable evaluation of the current-over-time characteristic using the amplitude span value and the predetermined passing time span value, the number of particles passing by the DEP electrodes can be determined. The evaluation unit thus analyses the electrical measurement signal as a function of time and detects step events in the measurement signal. Each complete pair of step events, up and down, in the current-over-time measurement results in a corresponding contribution to a particle count. In a particularly preferred embodiment of the driver circuit the evaluation unit is thus configured to detect in the received electrical measurement signal amplitude changes of an amount that is equal or larger than the predetermined amplitude span per particle. The evaluation unit determines an amount of the detected signal amplitude change at a given point in time, which may cover two or more sampling points of the measurement, taking into account usual signal response times of the measurement system. Using the amount of change in signal amplitude, the evaluation unit calculates the number of particles entering or leaving the extension of the DEP electrodes at the given point in time.

For the calculation of the the number of particles the evaluation unit uses the predetermined amplitude span value and the predetermined passing time span value, which may require taking into account an uncertainty in the passing time span value. Thus, a change of the signal amplitude in the measured current, which is equal to the predetermined amplitude span value, corresponds to a single particle entering or leaving the extension of the DEP electrodes. A change of the amplitude span value, that has a larger value proportional to the predetermined amplitude span value for one particle, corresponds to a proportional number of particles.

In another embodiment of the driver circuit the evaluation unit is separated from the driver circuit. For instance, the evaluation unit can be integrated in a computer. In that case, the evaluation unit receives the electrical measurement signal via a digital interface from the measurement unit.

A temperature measurement is useful due to a temperature dependence of electrical properties of the particles and of the viscosity of the carrier fluid. A higher temperature may result in a higher electrical current drawn by the DEP electrodes. Furthermore, for biological particles, a higher temperature may lead to cell damage. In a preferred embodiment, therefore, the driver circuit comprises a temperature measurement unit. The temperature measurement unit is configured to measure a temperature, e.g., using an optical temperature sensor, or another type of off-chip temperature sensor or on-chip temperature sensor, in the flowing carrier liquid in at least on location between the DEP electrodes and to provide a temperature measurement signal thereof. In this preferred embodiment the evaluation unit is configured to adapt the amplitude span value and the passing time span value in dependence on the temperature measurement signal. In a variant, the temperature measurement signal is alternatively or additionally used to control a cooling system used to set and maintain the temperature of the carrier liquid. In such embodiments of the driver circuit the temperature measurement signal is forwarded to an external temperature controller for setting and maintaining a desired temperature of the carrier liquid during measurement.

In an embodiment of the driver circuit the measurement unit is configured resolve a change amount of the electrical alternating current having a minimum amount of 20 pA, preferably 50 pA, in other embodiments 100 pA. This allows a particularly high resolution for particle types, which require a particularly low amount of energy for inducing the desired DEP effects.

Electrical impedance provides additional information about particle size. The analysis of the impedance and the current drawn by the DEP electrodes during DEP as a function of time allows to count particles and to determine their size simultaneously. In a preferred embodiment of the driver circuit the measurement unit determines a frequency and a phase of the electrical measurement signal and the evaluation unit is further configured to receive the input frequency and the input phase and to determine an impedance for the particles of the selected particle type thereof.

According to a second aspect of the invention, a dielectrophoresis system (DEP system) is proposed. The DEP system comprises:
- a microfluidic system, comprising
   - at least one microfluidic channel having an inlet and at least one outlet and configured to allow a flow of a carrier liquid comprising particles to be detected between the inlet and the outlet;
   - dielectrophoresis electrodes, hereinafter DEP electrodes, arranged to generate an alternating electrical field in a measurement volume of the microfluidic channel which is defined by extension of the DEP electrodes along a direction of flow of the carrier liquid;
   - at least one driver circuit for operation of the DEP electrodes according to any of the preceding claims connected to the DEP electrodes.

Such DEP systems can have different microfluidic system geometries. In one embodiment, a number of microfluidic channels are arranged in parallel to each other. This exemplary arrangement allows using a plurality of measurement units in parallel at the same time. In another embodiment a number of microfluidic channels are arranged in a row to each other. This arrangement allows various DEPs one after the other. In each DEP a different particle type can be counted.

In an embodiment, the DEP system comprises a driver circuit, which has a control interface, and a control unit for generating and providing the control signal indicative of the at least one frequency amount of the at least one frequency component of the output voltage. The control unit is connectable to the control interface of the driver circuit.

The control unit may comprise a user control interface for allowing a user to regulate the control signal manually, e.g., by individual selection of a suitable frequency amount for generating and providing the control signal for manipulating trajectories of the selected particle type.

Alternatively, or in addition to a manual control input capability, the control unit of some embodiments comprises a storage unit. The storage unit stores different control signal representations, which are indicative of a respective frequency component suitable for manipulating the trajectory of the respective particle type. Thus, the particle type, which should be counted, can be selected directly and thus very easily by a user, without requiring knowledge of the suitable frequency component.

In embodiments of the DEP system the DEP electrodes comprise a plurality of electrode fingers, as for example interdigitated electrodes. In other embodiments, the DEP electrodes are laminar electrodes. Laminar electrodes are electrodes that have a continuous, uninterrupted, planar surface.

In exemplary embodiments of the DEP system the fingers of the DEP electrodes are inclined with respect to the flow direction of the carrier liquid. Preferably, the fingers of the DEP electrodes have a longitudinal extension arranged at an angle of 45° with respect to the flow direction of the carrier liquid.

According to a third aspect of the invention, a method for operating of DEP system is provided. The method for operating of DEP system comprises:
- allowing a flow of a carrier liquid comprising particles to be detected between an inlet and an outlet of a microfluidic system of the DEP system;
- generating an alternating electrical field in a measurement volume of the microfluidic channel, the alternating electrical field having at least one frequency component suitable for inducing a dipole moment only in particles of a selected particle type comprised in the flowing carrier liquid in a vicinity of DEP electrodes, thus manipulating trajectories of the particles within the carrier liquid,;
- determining an electrical measurement signal indicative of an electrical current drawn by the DEP electrodes as a function of time.

In embodiments of this method, in a first step of the method for operating a DEP system, particles to be detected flow in a carrier liquid from an inlet to an outlet of a microfluidic system of the DEP system. In a second step, an alternating electrical field in a measurement volume of the microfluidic channel is generated. The alternating electrical field is in some embodiments added as a component to a constant field component that is additionally provided in the measurement volume. The alternating electrical field has a spatial inhomogeneity and a frequency component suitable for inducing a dipole moment only in particles of a selected particle type. Thus, particles within the carrier liquid are manipulated and change their trajectories thereof.

In a third step, an electrical measurement signal indicative of an electrical current drawn by the DEP electrodes as a function of time is determined.

The advantages of the method of the third aspect correspond to those described in the context of the DEP system of the second aspect and the driver circuit of the first aspect. Such method provides quicker measurement results due to generating the alternating electrical field and determining an electrical measurement signal as a function of time by means of the DEP electrodes.

In preferred embodiments, the method further comprises:
- receiving the electrical measurement signal as a function of time;
- determining and providing a number of particles of the given selected particle type passing the extension of the DEP electrodes by analyzing a dependence of the electrical measurement signal on time, using a predetermined amplitude span value per particle of a given selected particle type in the measurement signal and a predetermined passing time span value.

Preferably, the method for operating a DEP system additionally receiving the electrical measurement signal as a function of time. Thereafter, a number of particles of the given selected particle type is determined and provided. Determination of the number of particles occurs by analyzing a dependence of the electrical measurement signal on time, using a predetermined amplitude span value per particle of a given selected particle type in the measurement signal and a predetermined passing time span value.

In other embodiments, the method further comprises:
- detecting in the received electrical measurement signal amplitude changes of an amount that is equal or larger than the predetermined amplitude span per particle; and
- determining an amount of the detected signal amplitude change at a given point in time; and
- calculating, using the predetermined amplitude span value and the predetermined passing time span value, the number of particles entering or leaving the extension of the DEP electrodes at the given point in time associated with the given amplitude change.

In further embodiments of the method, signal amplitude changes of the received electrical measurement signal are detected, an amount of the detected signal amplitude change at a given point in time is determined and the number of particles entering or leaving the extension of the DEP electrodes at the given point in time associated with the given amplitude change is calculated.

In the following, further embodiments will be described with reference to the enclosed drawings. In the drawings:
Fig. 1 shows a block diagram of an embodiment of a driver circuit for operation of dielectrophoresis electrodes;
Fig. 2 shows a block diagram of an embodiment of a dielectrophoresis system;
Fig. 3 shows a block diagram of an embodiment of a method for operating of dielectrophoresis system;
Fig. 4a to 4c show a perspective view of an embodiment of a dielectrophoresis system in operation; and
Fig. 5 shows a current-time characteristic of a measurement performed by the DEP system.

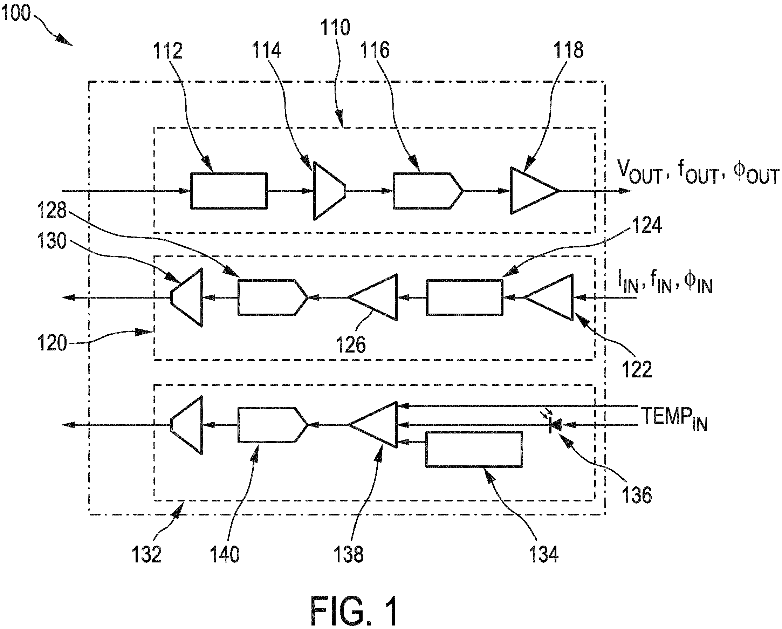

Fig. 1 shows a block diagram of an embodiment of a driver circuit 100 for operation of dielectrophoresis electrodes. A DEP signal generator unit 110 generates an alternating output voltage V_{OUT}. An alternating output voltage is used to avoid electrolysis effects, which will occur if a direct voltage is used. The requirements for the alternating output voltage V_{OUT} are set from extern. The signal for the alternating output voltage V_{OUT} is received by a random-access memory (RAM) 112 as several analog signals. A multiplexer (MUX) 114 downstream the RAM 112 is received the several digital signals and forwards them into a single output line to a digital to analog converter (DAC) 116, which converts the digital signal into an analog signal. Such analog signal is amplified by an amplifier (AMP) 118 and applied to a pair of DEP electrodes (not shown here). The output voltage is suitable for inducing a dipole moment only in particles of a selected particle type for manipulating trajectories of such the particles.

A measurement unit 120 is connected to the DEP electrodes. The measurement unit 120 receives an electrical measurement signal indicative of an electrical current I_{IN} drawn by the DEP electrodes as a function of time. The electrical current I_{IN} has an input frequency f_{IN} and an input phase φ_{IN}. The electrical measurement signal, which is an analog signal, is received and amplified by a transimpedance amplifier (TIA) 122, a rectifier (REC) 124 and an amplifier (AMP) 126. An Analog to digital converter (ADC) 128 converts the measurement signal into a digital signal and a multiplexer (MUX) 130 forwards the measurement signal into a single output line.

A temperature measurement 132 unit receives an analog temperature signal TEMP_{IN} via an on-chip temperature sensor 134 or an optical temperature sensor 136. The analog temperature signal TEMP_{IN} is amplified by an amplifier 138 and converted into a digital signal by an analog to digital converter 140.

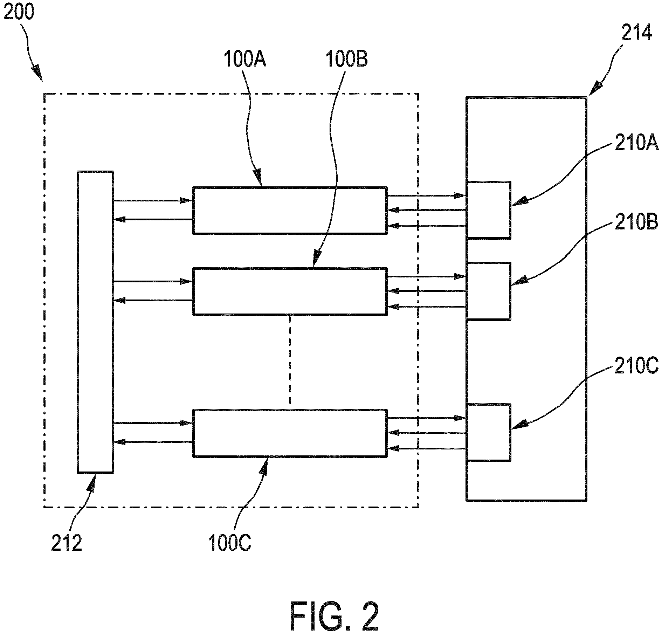

Fig. 2 shows a block diagram of an embodiment of a dielectrophoresis (DEP) system 200. In this DEP system 200 a number of driver circuits 100A, 100B, 100C for operation of dielectrophoresis electrodes 210A, 210B, 210C are operated in parallel. Each driver circuit 100A, 100B, 100C is connected to an evaluation unit 212 and to a respective pair of DEP electrodes 210A, 210B, 210C. The DEP electrodes 210A, 210B, 210C are connected to a microfluidic system 214, which allows a flow of a carrier liquid comprising particles to be detected and counted.

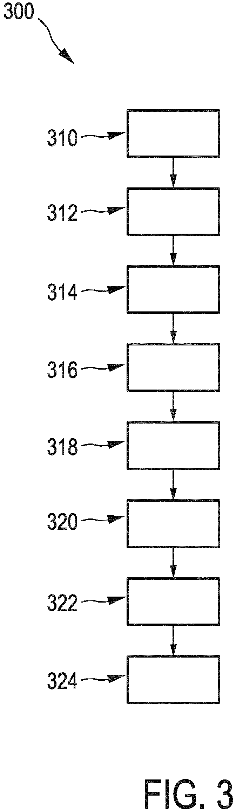

Fig. 3 shows a block diagram of an embodiment of a method 300 for operating of dielectrophoresis system. In this embodiment, in a first step 310 of the method for operating a DEP system, particles to be detected flow in a carrier liquid from an inlet to an outlet of a microfluidic system of the DEP system. In a second step 312, an alternating electrical field in a measurement volume of the microfluidic channel is generated. The alternating electrical field has a frequency component suitable for inducing a dipole moment only in particles of a selected particle type. Thus, particles within the carrier liquid are manipulated and change their trajectories thereof. In a third step 314, an electrical measurement signal indicative of an electrical current drawn by the DEP electrodes as a function of time is determined. In a fourth step 316, the electrical measurement signal as a function of time is received and a number of particles of the given selected particle type is determined and provided. In a fifth step 318, the determination of the number of particles occurs by analyzing a dependence of the electrical measurement signal on time, using a predetermined amplitude span value per particle of a given selected particle type in the measurement signal and a predetermined passing time span value. In a sixth step 320, the received electrical measurement signal amplitude changes are detected. In the next step 322, an amount of the detected signal amplitude change at a given point in time is determined. And in a last step 324, the number of particles entering or leaving the extension of the DEP electrodes at the given point in time associated with the given amplitude change is calculated.

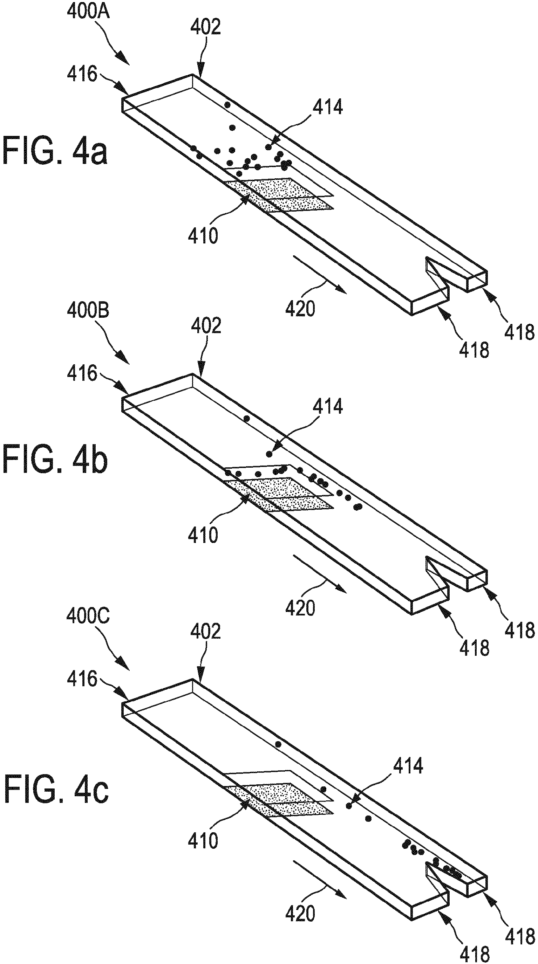

Fig. 4a to 4c show a perspective view of an embodiment of a dielectrophoresis system 400A, 400B, 400Cin operation at different times. The Figs. 4a to 4c show only a microfluidic system having one microfluidic channel 402. A pair of DEP electrodes 410 is integrated in the microfluidic channel 402. Fig. 4a displays a situation during DEP, when particles 414 comprised in a flowing carrier liquid enters the microfluidic channel 402 from an inlet 416 and flowing to an outlet 418 before they are reaching the DEP electrodes 410. When they reaching the DEP electrode 410, the particles 414 are manipulated and changes their trajectory for passing an extension of the DEP electrodes 410, as shown in Fig. 4b. The particles 414, which changes their trajectory are transported in flow direction 420 of the flowing carrier liquid, as shown in Fig. 4c.

For example, the particles are microalgae in a carrier liquid, which pass the extension of the DEP electrodes along a direction of flow of the carrier liquid. Microalgae have depending on their size different dielectric properties due to production of lipids during their growth. Thus, microalgae with the same size have the same dielectric properties and are affected by the same frequency of the inhomogeneous electrical field. In such example, the DEP system is used to separate microalgae with a high lipid amount from microalgae with a small lipid amount or no lipid amount.

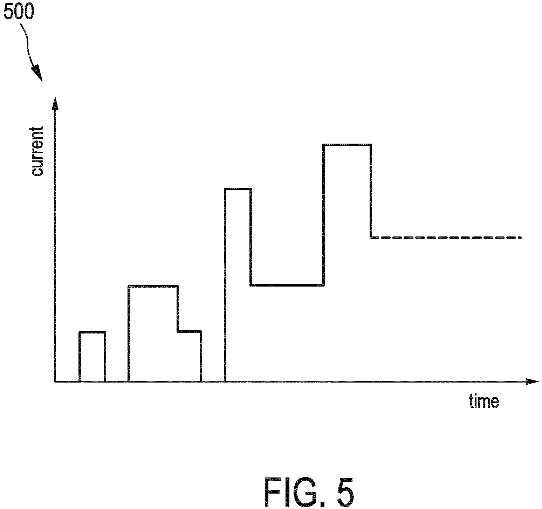

A current-over-time characteristic 500 is measured by a measurement unit. Fig. 5 shows such a current-over-time characteristic 500 of a measurement performed by the DEP system. Each time particles entering an extension of the DEP electrodes, which defines a measurement area, the current is increasing. Particles leaving the measurement area resulting in a decrease of the current signal. Thus, each step event represents a counting event. The amount of current change can be used for determining the number of particles. For calculating the exact number of particles passing the measurement area a suitable analysing method is used.

In summary, a driver circuit 100 for operation of dielectrophoresis (DEP) electrodes 210, 410 of an external DEP system 200 comprises a DEP signal generator unit 110, which is configured to generate and apply an alternating output voltage V_{OUT} to at least one pair of DEP electrodes 210, 410, suitable for inducing a dipole moment only in particles 414 of a selected particle type comprised in a flowing carrier liquid in a vicinity of the DEP electrodes 210, 410, for manipulating trajectories of the particles 414 within the carrier liquid. The alternating output voltage V_{OUT} is in some application cases selected to be substantially constant over a passing time span required by an individual particle 414 for passing an extension of the DEP electrodes 210, 410 along a direction of flow 420. In other application cases, the output voltage exhibits alternating amplitude even during the passing time span, which by way of an example may have a value in the range between 0.1 second and 5 second. A measurement unit 120, which is connected to the DEP electrodes 210, 410 determines and provides an electrical measurement signal indicative of an electrical current I_{IN} drawn by the DEP electrodes 210, 410 as a function of time.

In summary, a driver circuit for operation of dielectrophoresis (DEP) electrodes of an external DEP system comprises a DEP signal generator unit, which is configured to generate and apply an alternating output voltage to at least one pair of DEP electrodes, suitable for inducing a dipole moment in particles of a selected particle type comprised in a flowing carrier liquid in a vicinity of the DEP electrodes, for manipulating trajectories of the particles within the carrier liquid. A measurement unit, which is connected to the DEP electrodes determines and provides an electrical measurement signal indicative of an electrical current drawn by the DEP electrodes as a function of time.

In a preferred embodiment the dipole moment is induced only in particles of a selected particle type. In such an embodiment, the driver circuit comprises:
- a DEP signal generator unit, which is configured to generate and apply an alternating output voltage to at least one pair of DEP electrodes, the output voltage having at least one frequency component suitable for inducing a dipole moment only in particles of a selected particle type comprised in a flowing carrier liquid in a vicinity of the DEP electrodes, for manipulating trajectories of the particles with-in the carrier liquid; and
- a measurement unit, which is connected to the DEP electrodes and configured to determine and provide an electrical measurement signal indicative of an electrical current drawn by the DEP electrodes as a function of time.

## Claims

1. A driver circuit (100) for operation of dielectrophoresis electrodes (210, 410), hereinafter DEP electrodes, of an external dielectrophoresis system (200), hereinafter DEP system, comprising:
- a DEP signal generator unit (110), which is configured to generate and apply an alternating output voltage (V_{OUT}) to at least one pair of DEP electrodes (210, 410), the output voltage (V_{OUT}) having at least one frequency component (f_{OUT}) suitable for inducing a dipole moment in particles (414) of a selected particle type comprised in a flowing carrier liquid in a vicinity of the DEP electrodes (210, 410), for manipulating trajectories of the particles (414) within the carrier liquid;
- a measurement unit (120), which is connected to the DEP electrodes (210, 410) and configured to determine and provide an electrical measurement signal indicative of an electrical current (I_{IN}) drawn by the DEP electrodes (210, 410) as a function of time.

2. A driver circuit (100) according to claim 1, further comprising
- a control interface, which is configured to receive a control signal indicative of at least one frequency amount of the at least one frequency component (f_{OUT}) of the output voltage (VOUT); wherein
- the DEP signal generator unit (110) receives the control signal and is configured to generate the output voltage (V_{OUT}) with the at least one frequency component (f_{OUT}) indicated by the control signal.

3. A driver circuit (100) according to claim 1 or 2, further comprising
- an evaluation unit (212), which is configured to receive the electrical measurement signal as a function of time and to determine and provide a number of particles (414) of the given selected particle type passing the extension of the DEP electrodes (210, 410) by analysing a dependence of the electrical measurement signal on time, using a predetermined amplitude span value per particle of a given selected particle type in the measurement signal and a predetermined passing time span value.

4. A driver circuit (100) according to claim 3, wherein the evaluation unit (212) is configured
- to detect in the received electrical measurement signal amplitude changes of an amount that is equal or larger than the predetermined amplitude span per particle; and
- to determine an amount of the detected signal amplitude change at a given point in time and to calculate, using the predetermined amplitude span value and the predetermined passing time span value, the number of particles (414) entering or leaving the extension of the DEP electrodes (210, 410) at the given point in time associated with the given amplitude change.

5. A driver circuit (100) according to any of the preceding claims, further comprising
- a temperature measurement unit (132), which is configured to measure a temperature in the flowing carrier liquid in at least on location between the DEP electrodes (210, 410) and to provide a temperature measurement signal thereof; wherein
- the evaluation unit (212) is configured to adapt the amplitude span value and the passing time span value in dependence on the temperature measurement signal.

6. A driver circuit (100) according to any of the preceding claims, where the measurement unit is configured to resolve a change amount of the electrical alternating current (I_{IN}) of 100 pA.

7. A driver circuit (100) according to claim 1, wherein
- the measurement unit (120) is configured to determine a frequency (f_{IN}) and a phase (φ_{IN}) of the electrical measurement signal;
- the evaluation unit (212) is further configured to receive the input frequency (f_{IN}) and the input phase (φ_{IN}) and to determine an impedance for the particles of the selected particle type thereof.

8. A dielectrophoresis system (200), hereinafter DEP system, comprising
- a microfluidic system, comprising
- at least one microfluidic channel (402) having an inlet (416) and at least one outlet (418) and configured to allow a flow of a carrier liquid comprising particles to be detected between the inlet (416) and the outlet (418);
- dielectrophoresis electrodes (210, 410), hereinafter DEP electrodes, arranged to generate an alternating electrical field in a measurement volume of the microfluidic channel which is defined by extension of the DEP electrodes (210, 410) along a direction of flow (420) of the carrier liquid;
- at least one driver circuit (100) for operation of the DEP electrodes (210, 410) according to any of the preceding claims connected to the DEP electrodes (210, 410).

9. A dielectrophoresis system (200) according to claim 8, comprising
- a driver circuit (100) of claim 2; and
- a control unit for generating and providing the control signal indicative of the at least one frequency amount of the at least one frequency component (f_{OUT}) of the output voltage (VOUT).

10. A dielectrophoresis system (200) according to claim 8 or 9, wherein the DEP electrodes (210, 410) each comprise a plurality of electrode fingers.

11. A dielectrophoresis system (200) according to claims 8 to 10, wherein the fingers of the DEP electrodes (210, 410) are inclined with respect the flow direction (420) of the carrier liquid.

12. A method (300) for operating of dielectrophoresis system (200), hereinafter DEP system, comprising:
- allowing (310) a flow of a carrier liquid comprising particles to be detected between an inlet and an outlet of a microfluidic system of the DEP system;
- generating (312) an alternating electrical field in a measurement volume of the microfluidic channel, the alternating electrical field having at least one frequency component suitable for inducing a dipole moment in particles of a selected particle type comprised in the flowing carrier liquid in a vicinity of DEP electrodes, thus manipulating trajectories of the particles within the carrier liquid;
- determining (314) an electrical measurement signal indicative of an electrical current drawn by the DEP electrodes as a function of time.

13. The method (300) of claim 12, further comprising
- receiving (316) the electrical measurement signal as a function of time;
- determining and providing (318) a number of particles of the given selected particle type passing the extension of the DEP electrodes by analyzing a dependence of the electrical measurement signal on time, using a predetermined amplitude span value per particle of a given selected particle type in the measurement signal and a predetermined passing time span value.

14. The method (300) of claim 13, further comprising
- detecting (320) in the received electrical measurement signal amplitude changes of an amount that is equal or larger than the predetermined amplitude span per particle; and
- determining (322) an amount of the detected signal amplitude change at a given point in time; and
- calculating (324), using the predetermined amplitude span value and the predetermined passing time span value, the number of particles entering or leaving the extension of the DEP electrodes at the given point in time associated with the given amplitude change.
